# EUROPEAN PATENT SPECIFICATION

(11) **EP 4 389 297 B1**
(45) Date of publication and mention of the grant of the patent: **19.11.2025**
(21) Application number: 23215956.6
(22) Date of filing: 12.12.2023
(51) Int. Cl.: B05B 11/00

(54) **SYSTEM FOR DISPENSING A FLUID SUBSTANCE**
SYSTEM ZUR ABGABE EINER FLÜSSIGEN SUBSTANZ
SYSTÈME DE DISTRIBUTION D'UNE SUBSTANCE FLUIDE

(30) Priority: 20.12.2022 IT 202200026094
(43) Date of publication of application: 26.06.2024
(73) Proprietor: Coster Tecnologie Speciali S.p.A., 38050 Calceranica al Lago (Trento) (IT)
(72) Inventor: Tecchiolli, Alfeo, 38121 Meano (TN) (IT); Motter, Maurizio, 38057 Pergine Valsugana (TN) (IT); Zeni, Fabiano, 38050 Mezzano (TN) (IT)
(74) Representative: Vanosi, Adelio Valeriano

(56) References cited:
- WO-A2-2017/178780
- US-A- 4 940 170
- US-A1- 2008 011 365

## Description

### FIELD OF THE INVENTION

The present invention relates to a system for dispensing a fluid substance.

In particular it refers to a dispensing system that sprays a fluid substance housed in a container; the fluid substance can be contained in the pressurised container or can be brought under pressure by a manual pump coupled with the container.

### BACKGROUND ART

Patent US4940170 describes a spray cap that features a pressure regulator, or rather a pressure reducer, which regulates the supply pressure of a spray nozzle. Essentially, the pressure regulator reduces the pressure present in the pressurised can to a lower value, in order to optimise the pressure at the nozzle, regardless of the pressure present in the can (which is higher when there is plenty of substance to dispense, i.e. the can is full, and lower when the substance to be dispensed is almost finished).

This cap has dispensing faults, especially when the can is almost empty or has just been used for dispensing.

Indeed, it tends to drip from the nozzle (dripping) or squirts in an uncontrolled manner (drooling or jetting). Documents US 2008/011365 A1 and WO 2017/178780 A2 further disclose dispensing systems with caps.

### SUMMARY OF THE INVENTION

The object of the present invention is to provide a system for dispensing a fluid substance which is improved compared with the prior art.

A further object of the invention is to provide a dispensing system that minimises or eliminates dispensing faults found in the prior art.

This and other objects are achieved by means of a dispensing system according to the technical teachings of the claims annexed hereto.

### BRIEF DESCRIPTION OF THE FIGURES

Further features and advantages of the innovation will become clearer in the description of a preferred but not exclusive embodiment of the device, illustrated - by way of a non-limiting example - in the drawings appended hereto, in which:
Figure 1 is a cross-sectional view of the system according to the present invention;
Figure 2 is an enlargement of the part circled in the large circle in Figure 1;
Figure 3 is an enlargement of the part circled in the small circle in Figure 1;
Figure 4 shows the sectional view in Figure 3 in a different operating condition;
Figure 5 is a perspective bottom-up view of part of the system in Figure 1;
Figure 6 is a sectional view taken along line VI-VI in Figure 1; and
Figure 7 is an enlargement of the part circled in Figure 6.

### DETAILED DESCRIPTION OF THE INVENTION

With reference to the figures stated, reference number 100 is used to denote, as a whole, a system for dispensing a fluid substance.

In this text, the term 'fluid substance' S means a substance designed to be sprayed.

The said substance may be, for example, a household substance (an air freshener, a cleaning product, etc.) a substance for the body (for example a sun lotion, a perfume, a deodorant, a hairspray etc.), a medical product, or a technical product such as a paint, lubricant, etc.

The substance S is housed, directly or inside a deformable bag, in a container 5.

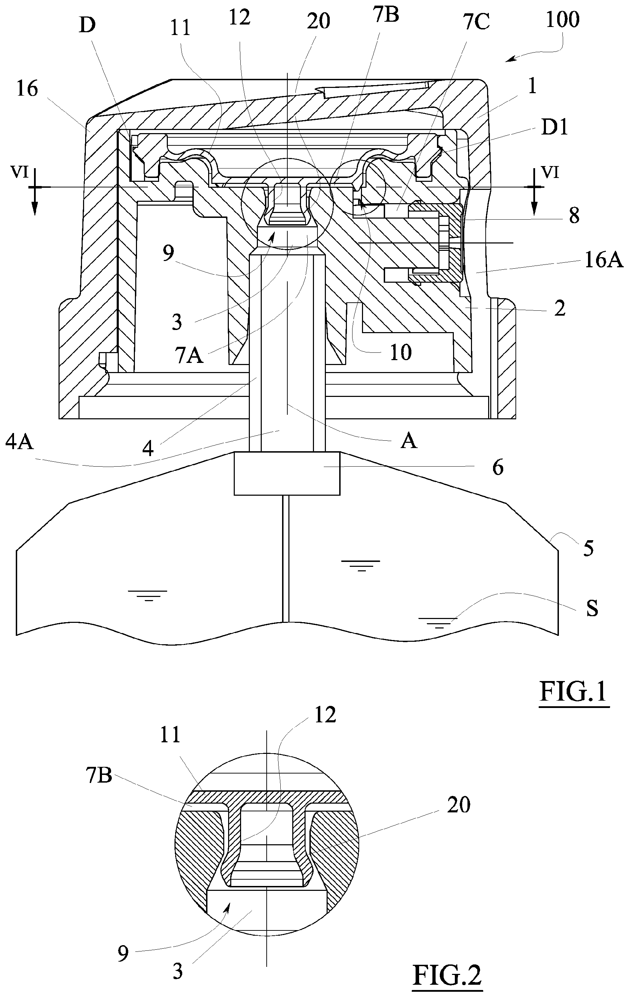

The container 5 may be a pressurised vessel (for example an aerosol can), equipped with the said dispensing means 6 which allow the substance S to be delivered, under pressure, to a cavity 4A of a stem coupled with the container, or rather to a valve 6 coupled to the container 5. The valve 6 may be conventionally configured so as to open when a displacement of the stem 4 occurs (downwards in Figure 1) upon a cap 1 (or cover) coupled to the said stem being pressed, and to close when the pressure on the cap ceases.

Alternatively, the said dispensing means 6 comprise a pump which is likewise activated by the displacement of the said stem 4; the pump pressurises the fluid substance S taken from the container 5 and conveys the said pressurised fluid into the stem cavity 4A, also in a conventional way.

The dispensing means may be coupled to a suction tube (not shown), preferably if the substance S is housed directly in the container 5 (whether the said container is pressurised or not).

The suction tube may also not be present, even though the substance is housed directly in the container. In this case, there may be a mobile bottom (better known as a piston) which rises as a result of the dispensing of the product.

In the event that the substance S is housed indirectly in the container 5, therefore, for example in a deformable bag which is pressurised externally or coupled to an airless pump, the suction tube may be absent.

Therefore, the dispensing system 100 includes a container 5 configured to house (directly or indirectly) a fluid substance S.

The container includes a hollow stem 4 coupled with dispensing means 6 configured to deliver the said substance S, under pressure, into the cavity 4A of the hollow stem 4, following displacement of the said stem.

The system further comprises a cap 1, the cap comprising a base body 2 in which a first seat 3 is defined, configured to sealingly couple to the said hollow stem 4.

The base body delimits, at least partially, a conduit 7A, 7B, 7C, the conduit 7A, 7B, 7C featuring a first end in fluid flow communication with the said seat 3 and a second end coupled to a spray nozzle 8.

On the conduit 7A, 7B, 7C, there is a pressure regulator 9 configured to regulate a passage section 20 for the flow of the said substance S according to the pressure present in the cavity 4A of the stem 4 so as to reduce the passage section in the event of an increase in pressure in the said cavity 4A and increase the passage section 20 in the event of a reduction in the pressure present in cavity 4A, all to maintain a pressure downstream of the pressure regulator 9 which is essentially constant even in the presence of a certain pressure upstream of the pressure regulator 9, therefore in the can, or downstream of the manual pump.

This pressure, especially in an aerosol can, also varies considerably over the useful life of the system. Indeed, when the can is full, the pressure is higher, for example around 8 bar, while when the can is empty (because the substance has been dispensed) the pressure can even drop to 2 bar.

The pressure regulator 9, in practice, reduces the pressure at the nozzle, bringing it into an optimal operating range for the said nozzle, for example around 2-3 bar, regardless of the pressure in the can (or the delivery pressure of the manual pump, which is also slightly variable during the actuation stroke, and therefore may experience peaks in pressure).

Obviously, the regulator 9 cannot raise the delivery pressure, only reduce it.

On the conduit 7A, 7B, 7C, between the pressure regulator 9 and the nozzle 8, there is a valve element 10 configured to close the conduit 7A, 7B, 7C when the pressure present inside the said conduit is below a predetermined threshold and to open the conduit, instead, when the pressure in the conduit is above the said threshold.

In practice, the valve element 10, at the end of dispensing, closes when the pressure drops below a predetermined threshold which is a fixed value of between 2.5 and 3.5 bar, preferably approximately 3 bar, or the threshold can be a pressure range of between 2.5 and 3.5 bar, preferably a pressure range in the vicinity of 3 bar. In this way, dripping or drooling phenomena that can occur in actuation transients at the end of system actuation are eliminated or minimised.

It must be said that, in aerosol cans, the phenomenon of a pressure surge which can cause dripping from the nozzle can also occur when the valve 6 is closed, far from an opening transient. This is due to the vaporisation of part of the propellant (for example nitrogen) which remains dissolved in the substance S present downstream of the valve 6. In this case, the presence of the valve element 10 prevents or minimises the expulsion of the substance from the nozzle, minimising or preventing dripping.

On the other hand, the valve element 10 opens only when the pressure upstream of the valve element exceeds the said predetermined threshold, allowing the substance S to reach the nozzle 8 with a pressure which is always sufficient to generate excellent spray (therefore preventing or minimising jetting phenomena).

A further advantage due to the presence of the valve element 10 is that of completely preventing the expulsion of the substance S through the nozzle (even with the stem in the dispensing position) if the pressure upstream of the valve element 10 is not sufficient to spray the substance S in an optimal manner through the nozzle 8 (therefore, for example, if the aerosol can is empty, or if any pump present is operated with too little force or too slowly).

According to the invention, at least part of the conduit 7A, 7B, 7C is at least partially delimited by a membrane element 11 which supports a first shutter 12 on the pressure regulator 9 and a second shutter 13 on the valve element 10.

The membrane element 11 has an essentially elastic or viscoelastic behaviour and allows an essentially axial (elastic) displacement along axis A of at least the first shutter 12 but advantageously also of the second shutter 13.

The first 12 and the second shutter 13 are made in a single piece (integrally made) with the said membrane element 11.

The membrane element 11 is configured so as to elastically preload (in an optimised manner) the second shutter 13, allowing the said shutter to operate according to the methods envisaged and described here.

In parallel, the membrane 11 also keeps the first shutter 12 suspended, allowing the latter to undergo a controlled (essentially elastic) displacement, preferably along axis A.

One or more of the following materials can be useful for the production of the membrane element 11: PE, PP, POM, PET, PA, PBT, TPE, TPO, preferably with elastic-plastic behaviour.

The membrane 11 can be fixed, preferably in an undercut (and sealed) manner, to the said base body 2.

For this purpose, the membrane 11 can feature a tooth D which engages, in an undercut manner, in a corresponding seat D1 made in the base body 2.

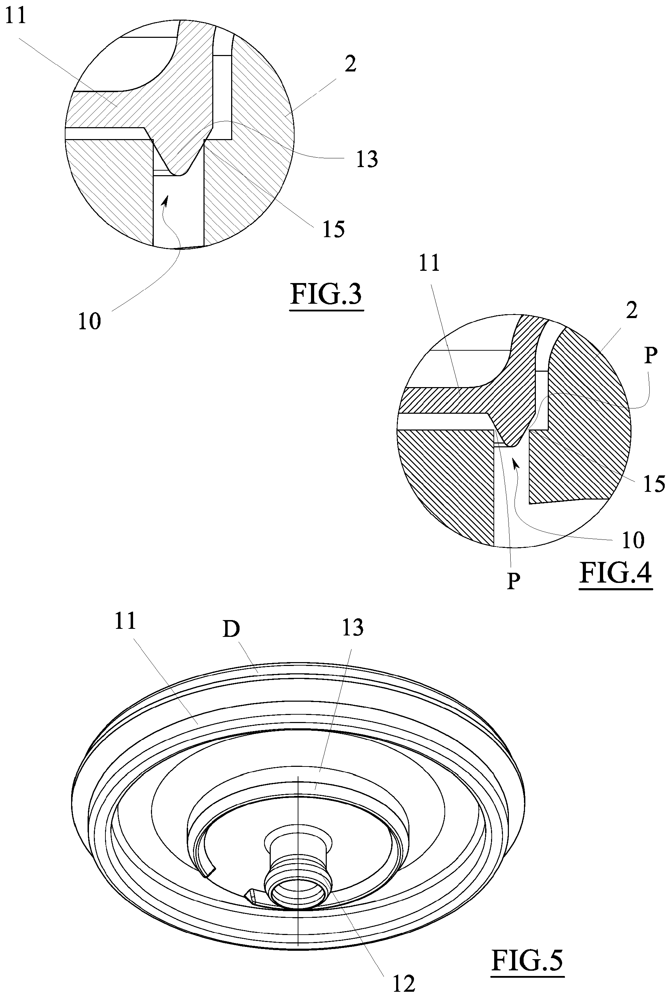

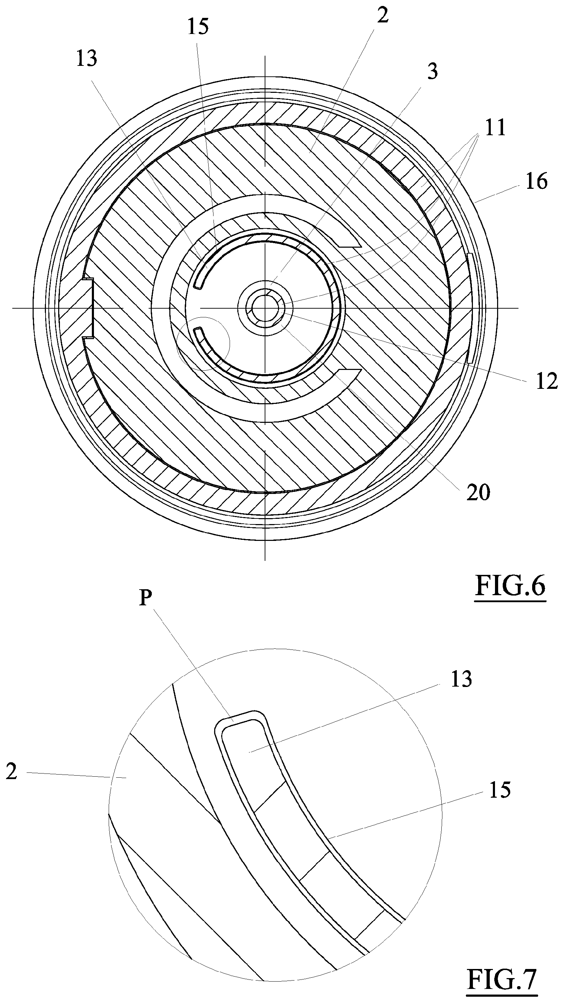

As can be seen in Figure 5, the second shutter 13 can be shaped like a lip with a curved oblong conformation, preferably in the shape of a curved arc, the valve element 10 comprising a second seat 15 with a conformation corresponding to that of the shutter 13 (Fig. 6).

Advantageously, the curve is a circumference or an ellipse.

The angular range of the second shutter 13 can be greater than 90°, preferably greater than 180°, even more preferably between 350° and 300°.

In this way, when the valve element 10 is open (Fig. 4 and Fig. 7), the flow of the fluid substance S towards the nozzle 8 has a passage area P (Fig. 7) which allows a flow of the substance S without bottlenecks.

It is therefore sufficient for the second shutter 13 to displace (vertically), even only very slightly, to clear the passage area P, which is sized so as not to influence or restrict the flow of the substance S, the flow being regulated solely by the pressure regulator 9.

Therefore, the passage P, with the valve element 10 open, will have an area for the passage of the fluid substance S which is always greater than or equal to the area of the section of the passage section 20 which is controlled or determined by the pressure regulator 9 in those dispensing conditions.

The second shutter 13, alternatively, can comprise two or more protruding elements with a lip conformation (or with another conformation, for example cone, cylindrical, pyramid, etc.) which cooperate with a corresponding number of second seats or holes 15 obtained in the base body 2 (preferably with a conformation corresponding to that of the protruding elements), the said second seats or holes - when the valve element 10 is open - being in communication with the third section 7C of the conduit.

A number of protruding elements/second seats may be envisaged so as to delimit an overall passage area (when the valve element 10 is open) which is greater than that of the passage section 20 delimited by the regulator 9.

As is visible in the figures, the conduit can comprise a first section 7A upstream of the pressure regulator 9, a second section 7B between the pressure regulator 9 and the valve element 10, and a third section 7C between the valve element 10 and the nozzle 8.

Advantageously, the second section 7B of the conduit is determined by the volume present between the base body 2 and the membrane element 11.

To end the description, it must be highlighted that at least part of the base body 2 can be covered by a covering 16 with an aesthetic function (which may also be made of a metal material or with a metal finish), designed to hide the membrane 11 from the view of a user and at least part of the base body 2.

The covering 16 can feature an opening 16A which exposes at least part of said nozzle 8 to view.

Various embodiments of the innovation have been disclosed herein, but further embodiments may also be conceived using the same innovative concept.

## Claims

1. A dispensing system (100) comprising a container (5) configured to accommodate a fluid substance (S), the container comprising a hollow stem (4) and dispensing means (6) configured to deliver into the cavity (4A) of the hollow stem (4), following a translation of the hollow stem (4), said substance (S) under pressure, and a cap (1), the cap comprising a base body (2) in which a first seat (3) is defined, the seat being configured to sealedly couple to said hollow stem (4), the base body at least partially defining a conduit (7A, 7B, 7C), the conduit (7A, 7B, 7C) having a first end in fluid flow communication with said seat (3) and a second end associated with a spray nozzle (8), a pressure regulator (9) being provided on the conduit (7A, 7B, 7C) and being configured to regulate a passage section (20) of said substance (S) as a function of the pressure present in the cavity (4A) of the stem (4) in order to reduce the passage section if the pressure in said cavity (4A) increases and to increase the passage section if the pressure present in the cavity (4A) decreases, this to maintain a pressure, downstream of the pressure regulator (9),that is substantially constant even in the presence of a variable pressure upstream of the regulator (9), **characterized by** the fact that on the conduit (7A, 7B, 7C), between the pressure regulator (9) and the nozzle (8) there is at least a valve element (10) configured to close the conduit (7A, 7B, 7C) when a pressure lower than a predetermined threshold is present inside it, and to open the conduit when the pressure in the duct is higher than said threshold, the conduit (7A, 7B, 7C) being at least partially defined by a membrane element (11) which supports a first shutter (12) of the pressure regulator (9) and a second shutter (13) of the valve element (10), the first (12) and second shutter (13) being integrally made with said membrane (11).

2. System according to claim 1, wherein said membrane is fixed, preferably in undercut way, to said base element (2).

3. System according to claim 1, wherein, during dispensing, with the valve element (10) open, a passage area (P) of the fluid substance (S) through the valve element (10) is greater than or equal of the area of the passage section (20) controlled by the pressure regulator (9).

4. System according to claim 1, wherein the second shutter (13) is lip-shaped, with an oblong curved shape, preferably an arc of a curve, the valve element (10) comprising a second seat (15) having a shape corresponding to that shutter (13).

5. System according to claim 4, wherein the curve is a circle or an ellipse.

6. System according to claim 1, wherein said conduit comprises a first section (7A) upstream of the pressure regulator (9), a second section (7B) between the pressure regulator (9) and the valve element (10), the second section (7B) of the conduit being defined between the base body (2) and the membrane element (11), and a third section (7C) between the valve element (10) and the nozzle (8).

7. System according to claim 1, wherein at least a part of the base body (2) is covered by a covering (16) with aesthetic functions, aimed at hiding said membrane (11) from the view of a user, the covering (16) providing an opening (16A) though which at least a part of said nozzle (8) is visible.

8. System according to claim 1, wherein said container (5) is a pressurized vessel, and said dispensing means (6) comprise a valve opened by the translation of said stem (4) when said cap (1) is pressed.

9. System according to claim 1, wherein said dispensing means comprise a pump actuated by the translation of said rod (4), which pressurizes said fluid substance (S) taken from the container (5), and conveys it, pressurized, into the cavity (4A) of the stem.

## Patentansprüche

1. Abgabesystem (100), umfassend einen Behälter (5), der dazu konfiguriert ist, eine flüssige Substanz (S) aufzunehmen, wobei der Behälter einen hohlen Schaft (4) und Abgabemittel (6) umfasst, die dazu konfiguriert sind, nach einer Translation des hohlen Schafts (4) die Substanz (S) unter Druck in den Hohlraum (4A) des hohlen Schafts (4) zu liefern, und eine Kappe (1), wobei die Kappe einen Basiskörper (2) umfasst, in dem ein erster Sitz (3) definiert ist, wobei der Sitz dazu konfiguriert ist, dichtend an den hohlen Schaft (4) zu koppeln, wobei der Basiskörper zumindest teilweise eine Leitung (7A, 7B, 7C) definiert, wobei die Leitung (7A, 7B, 7C) ein erstes Ende in flüssiger Flusskommunikation mit dem Sitz (3) und ein zweites Ende assoziiert mit einer Sprühdüse (8) aufweist, wobei ein Druckregler (9) an der Leitung (7A, 7B, 7C) bereitgestellt ist und dazu konfiguriert ist, einen Durchlassabschnitt (20) der Substanz (S) in Abhängigkeit von dem Druck, der in dem Hohlraum (4A) des Schafts (4) vorhanden ist, zu regeln, um den Durchlassabschnitt zu reduzieren, wenn sich der Druck in dem Hohlraum (4A) erhöht, und um den Durchlassabschnitt zu erhöhen, wenn der Druck, der in dem Hohlraum (4A) vorhanden ist, abnimmt, um einen Druck stromabwärts des Druckreglers (9) aufrechtzuerhalten, der auch in der Gegenwart eines variablen Drucks stromaufwärts des Reglers (9) im Wesentlichen konstant ist, **gekennzeichnet durch** die Tatsache, dass es an der Leitung (7A, 7B, 7C) zwischen dem Druckregler (9) und der Düse (8) zumindest ein Ventilelement (10) gibt, das dazu konfiguriert ist, die Leitung (7A, 7B, 7C) zu schließen, wenn ein Druck niedriger als ein vorbestimmter Schwellenwert darin vorhanden ist, und die Leitung zu öffnen, wenn der Druck in der Leitung höher als der Schwellenwert ist, wobei die Leitung (7A, 7B, 7C) zumindest teilweise durch ein Membranelement (11) definiert ist, das einen ersten Verschluss (12) des Druckreglers (9) und einen zweiten Verschluss (13) des Ventilelements (10) stützt, wobei der erste (12) und der zweite Verschluss (13) einstückig mit der Membran (11) hergestellt sind.

2. System nach Anspruch 1, wobei die Membran, bevorzugt in hinterschnittener Weise, an dem Basiselement (2) befestigt ist.

3. System nach Anspruch 1, wobei während des Abgebens, wenn das Ventilelement (10) offen ist, ein Durchlassbereich (P) der flüssigen Substanz (S) durch das Ventilelement (10) größer als der oder gleich dem Bereich des Durchlassabschnittes (20) ist, der durch den Druckregler (9) gesteuert wird.

4. System nach Anspruch 1, wobei der zweite Verschluss (13) lippenförmig mit einer länglichen gekrümmten Form ist, bevorzugt einem Bogen einer Krümmung, wobei das Ventilelement (10) einen zweiten Sitz (15) umfasst, der eine Form entsprechend diesem Verschluss (13) aufweist.

5. System nach Anspruch 4, wobei die Krümmung ein Kreis oder eine Ellipse ist.

6. System nach Anspruch 1, wobei die Leitung einen ersten Abschnitt (7A) stromaufwärts des Druckreglers (9), einen zweiten Abschnitt (7B) zwischen dem Druckregler (9) und dem Ventilelement (10), wobei der zweite Abschnitt (7B) der Leitung zwischen dem Basiskörper (2) und dem Membranelement (11) definiert ist, und einen dritten Abschnitt (7C) zwischen dem Ventilelement (10) und der Düse (8) umfasst.

7. System nach Anspruch 1, wobei zumindest ein Teil des Basiskörpers (2) durch eine Abdeckung (16) mit ästhetischen Funktionen bedeckt ist, die darauf abzielt, die Membran (11) aus der Sicht eines Benutzers zu verbergen, wobei die Abdeckung (16) eine Öffnung (16A) bereitstellt, durch die zumindest ein Teil der Düse (8) sichtbar ist.

8. System nach Anspruch 1, wobei der Behälter (5) ein unter Druck stehendes Gefäß ist und die Abgabemittel (6) ein Ventil umfassen, das durch die Translation des Schafts (4) geöffnet wird, wenn die Kappe (1) gedrückt wird.

9. System nach Anspruch 1, wobei die Abgabemittel eine Pumpe umfassen, die durch die Translation der Stange (4) betätigt wird, welche die flüssige Substanz (S), die aus dem Behälter (5) entnommen wird, unter Druck setzt und sie unter Druck in den Hohlraum (4A) des Schafts befördert.

## Revendications

1. Système de distribution (100) comprenant un contenant (5) conçu pour recevoir une substance fluide (S), le contenant comprenant une tige creuse (4) et un moyen de distribution (6) conçu pour fournir dans la cavité (4A) de la tige creuse (4), suite à une translation de la tige creuse (4), ladite substance (S) sous pression, et un capuchon (1), le capuchon comprenant un corps de base (2) dans lequel un premier siège (3) est défini, le siège étant conçu pour se coupler de manière étanche à ladite tige creuse (4), le corps de base définissant au moins partiellement un conduit (7A, 7B, 7C), le conduit (7A, 7B, 7C) comportant une première extrémité en communication fluidique avec ledit siège (3) et une seconde extrémité associée à une buse de pulvérisation (8), un régulateur de pression (9) étant prévu sur le conduit (7A, 7B, 7C) et étant conçu pour réguler une section de passage (20) de ladite substance (S) en fonction de la pression présente dans la cavité (4A) de la tige (4) afin de réduire la section de passage si la pression dans ladite cavité (4A) augmente et d'augmenter la section de passage si la pression présente dans la cavité (4A) diminue, ceci pour maintenir une pression, en aval du régulateur de pression (9), sensiblement constante même en présence d'une pression variable en amont du régulateur (9), **caractérisé par le fait que**, sur le conduit (7A, 7B, 7C), entre le régulateur de pression (9) et la buse (8), se trouve au moins un élément de soupape (10) conçu pour fermer le conduit (7A, 7B, 7C) lorsqu'une pression inférieure à un seuil prédéterminé est présente à l'intérieur de celui-ci, et pour ouvrir le conduit lorsque la pression dans le conduit est supérieure audit seuil, le conduit (7A, 7B, 7C) étant au moins partiellement défini par un élément de membrane (11) qui supporte un premier obturateur (12) du régulateur de pression (9) et un second obturateur (13) de l'élément de soupape (10), le premier (12) et le second obturateur (13) étant réalisés d'une seule pièce avec ladite membrane (11).

2. Système selon la revendication 1, dans lequel ladite membrane est fixée, de préférence en contre-dépouille, audit corps de base (2).

3. Système selon la revendication 1, dans lequel, pendant la distribution, l'élément de soupape (10) étant ouvert, une aire de passage (P) de la substance fluide (S) à travers l'élément de soupape (10) est supérieure ou égale à l'aire de la section de passage (20) commandée par le régulateur de pression (9).

4. Système selon la revendication 1, dans lequel le second obturateur (13) est en forme de lèvre, avec une forme courbe oblongue, de préférence un arc de courbe, l'élément de soupape (10) comprenant un second siège (15) comportant une forme correspondant à cet obturateur (13).

5. Système selon la revendication 4, dans lequel la courbe est un cercle ou une ellipse.

6. Système selon la revendication 1, dans lequel ledit conduit comprend une première section (7A) en amont du régulateur de pression (9), une deuxième section (7B) entre le régulateur de pression (9) et l'élément de soupape (10), la deuxième section (7B) du conduit étant définie entre le corps de base (2) et l'élément de membrane (11), et une troisième section (7C) entre l'élément de soupape (10) et la buse (8).

7. Système selon la revendication 1, dans lequel au moins une partie du corps de base (2) est recouverte d'un revêtement (16) ayant des fonctions esthétiques, visant à cacher ladite membrane (11) de la vue d'un utilisateur, le revêtement (16) fournissant une ouverture (16A) à travers laquelle au moins une partie de ladite buse (8) est visible.

8. Système selon la revendication 1, dans lequel ledit contenant (5) est un récipient sous pression, et ledit moyen de distribution (6) comprend une soupape ouverte par la translation de ladite tige (4) lorsque ledit capuchon (1) est pressé.

9. Système selon la revendication 1, dans lequel ledit moyen de distribution comprend une pompe actionnée par la translation de ladite barre (4), qui met sous pression ladite substance fluide (S) prise dans le contenant (5), et la transporte, sous pression, jusque dans la cavité (4A) de la tige.
